# EUROPEAN PATENT SPECIFICATION

(11) **EP 2 050 635 B1**
(45) Date of publication and mention of the grant of the patent: **24.12.2014**
(21) Application number: 08166094.6
(22) Date of filing: 08.10.2008
(51) Int. Cl.: B60R 21/34

(54) **Airbag apparatus**
Airbag-Vorrichtung
Dispositif d'airbag

(30) Priority: 16.10.2007 JP 2007268684; 03.09.2008 JP 2008225558
(43) Date of publication of application: 22.04.2009
(73) Proprietor: Takata Corporation, Tokyo 106-8510 (JP)
(72) Inventor: Takimoto, Takayuki, Tokyo 106-8510 (JP); Kobayashi, Yoshihiro, Tokyo 106-8510 (JP); Nakamura, Atsushi, Tokyo 106-8510 (JP)
(74) Representative: Vossius & Partner

(56) References cited:
- EP-A1- 1 479 574
- WO-A1-2008/142883
- JP-A- 2006 298 150

## Description

The present invention relates to an airbag apparatus for absorbing an impact applied to an object of a collision, or a vehicle, while expanding and developing to an outside of the vehicle by means of a gas from an inflator or the like, in an emergency such as a case when the vehicle collides with the object of the collision, or the like.

Hitherto, an airbag that absorbs an impact generated by re-collision between a pedestrian or the like and a vehicle, while causing the airbag to expand to an outside of a pillar portion of the vehicle at a time of collision between the vehicle and the pedestrian or the like, is known.
For example, an airbag apparatus, whose impact-absorbing performance is improved by means of developing a cover toward an outside in a vehicle width direction, expanding the bag body of the airbag toward an inside in the vehicle width direction, and holding a bag body of the airbag at the expanded position when the bag body of the airbag is expanded on a front side above a front pillar, is disclosed (refer to JP-A-2002-283939 (Patent Document 1)).

Further, an airbag apparatus having a structure in which a thermoplastic elastomer that can be easily deformed is used, or a cover portion is divided in a plurality in a longitudinal direction, and thereby a curvature component is absorbed in order to smoothly rotate a cover that is integrally formed with a cowl louver curved in the longitudinal direction is disclosed (refer to JP-A-2003-252140 (Patent Document 2)).

EP 1 479 574 A1 relates to an external airbag device including a bag base which deploys along the lower edge of the wind shield, and bag side segments which deploys while extending upwardly from the right and left sides of the bag base along the exteriors of A-pillars. Guide rods vertically extend along the exteriors of the A-pillars. Each of the bag side segments has a connecting strap on its top that connects the bag side segment to the guide rod. The connecting straps are movable along the guide rods.

Another example of an external airbag device is disclosed in document JP 2006298150 A.

In general, a windshield of a vehicle is curved, and many of front pillars disposed therealong are curved.

In the airbag apparatus described in the Patent Document 1, although a developing portion of a garnish panel is expanded when an airbag housed in the front pillar is expanded, there is no specific description with respect to a countermeasure for a curvature component of the developing portion that is curved in the longitudinal direction.

Further, in the airbag apparatus described in the Patent Document 2, it is difficult to smoothly rotate around an axis having a curvature, even in a case of using a member that can be easily deformed. Furthermore, in a case that the curvature component is absorbed by means of dividing a cover portion in a plurality in the longitudinal direction, there has been a possibility to cause sink marks to appear in design.

The present invention is made in light of the above-described problems, and an object of the present invention is to provide an airbag apparatus capable of appropriately and softly receiving a pedestrian or the like by means of smoothly expanding. This object is achieved with the features of the claims.

In order to solve the above-described problems, in an airbag apparatus including an airbag, an inflator for blowing out a gas into the airbag, a detecting device for detecting a collision, a control device for activating the inflator by means of a signal from the detecting device, and a cover for housing the airbag, and expanding the airbag that is disposed along a front pillar on an outside of the vehicle, a cover-splash prevention member that is configured to allow separation of the cover from the vehicle in a state that the cover is coupled with the vehicle at a time when the airbag is expanded is provided. According to the present invention, the cover-splash prevention member is connected to the cover.

The cover is provided with at least one cover insertion portion, into which the cover-splash prevention member is inserted.

Furthermore, a developing position limiting device inserted into an insertion portion provided in the airbag, in which one end thereof is latched on the vehicle or the airbag, and inserted into an insertion member fixed to the vehicle on the other end side and folded back, and in which the other end thereof is latched on the airbag, is provided.

Moreover, the cover-splash prevention member is latched on the insertion member.

Further, a latching device for latching the one end of the developing position limiting device on the vehicle is provided, and the cover-splash prevention member is latched on the latching device.

According to the thus constructed airbag apparatus with respect to the present invention, since the cover-splash prevention member that separates the cover from the vehicle in a state where the cover is coupled with the vehicle at a time when the airbag is expanded is provided, a load is hard to be applied to the cover, and a breakage and a splash of the cover can be prevented.

Furthermore, since the cover is provided with at least one cover insertion portion into which the cover-splash prevention member is inserted, an attaching work can be performed with ease.

Further, since the developing position limiting device inserted into the insertion portion provided in the airbag, in which one end thereof is latched on the vehicle or the airbag, and inserted into an insertion member fixed to the vehicle on the other end side and folded back, and in which the other end thereof is latched on the airbag, is provided, when the other end of the developing position limiting device that is latched on the airbag is pulled by the expanded airbag at the time when the airbag is expanded, the developing position limiting device is strained and the insertion portion of the airbag is pulled to the vehicle side, and the airbag itself is also pulled to the vehicle side, thereby the airbag can be stably and rapidly expanded without a rebound in an upper and lower direction and a lateral wobbling in a width direction of the vehicle.

Further, since the cover-splash prevention member is latched on the insertion member, common members can be used, the number of the parts can be reduced, and the cost can be suppressed to be low.

Furthermore, since a latching device for latching one end of the developing position limiting device on the vehicle is provided, and the cover-splash prevention member is latched on the latching device, the common members can be used, the number of the parts can be reduced, and the cost can be suppressed to be low.

Hereinbelow, an embodiment of the present invention will be explained with reference to the drawings:
- Fig. 1: is a view illustrating an embodiment of the airbag with respect to the present invention;
- Fig. 2: is a perspective view illustrating a vehicle on which an airbag apparatus of the present embodiment is mounted;
- Fig. 3: is a perspective view illustrating the vicinity of a front pillar of the vehicle of the present embodiment;
- Fig. 4: is a cross-sectional view taken along a line a-a in Fig. 3;
- Fig. 5: is a view illustrating an operation of the airbag apparatus of the present embodiment;
- Fig. 6: is a perspective view illustrating the vicinity of the front pillar in a completion stage of the expanding operation;
- Fig. 7: is a cross-sectional view taken along a line b-b in Fig. 6;
- Fig. 8: is an enlarged view illustrating the vicinity of the through anchor;
- Fig. 9: is a view where the airbag is omitted;
- Fig. 10: is a perspective view illustrating the vicinity of the front pillar in the completion stage of the expanding operation in another embodiment, in which the airbag is omitted;
- Fig. 11: is a view looking at a roof side from a cross section at a line c-c in Fig. 10;
- Fig. 12: is a cross-sectional view taken along a line d-d in Fig. 10;
- Fig. 13: is a perspective view illustrating a cover using a hinge;
- Fig. 14: is an enlarged view illustrating a hinge portion;
- Fig. 15: is an enlarged view illustrating the hinge portion at a usual time and an operating time;
- Fig. 16: is a view illustrating another embodiment where the hinge and a wire are used to serve as a cover-splash prevention member;
- Fig. 17: is an enlarged view illustrating a first wire portion;
- Fig. 18: is a view illustrating a structure where the wire is provided only at one end;
- Fig. 19: is a view illustrating a structure where a flange and a hole are provided in the cover; and
- Fig. 20: is a view illustrating another embodiment of the cover-splash prevention member 17.

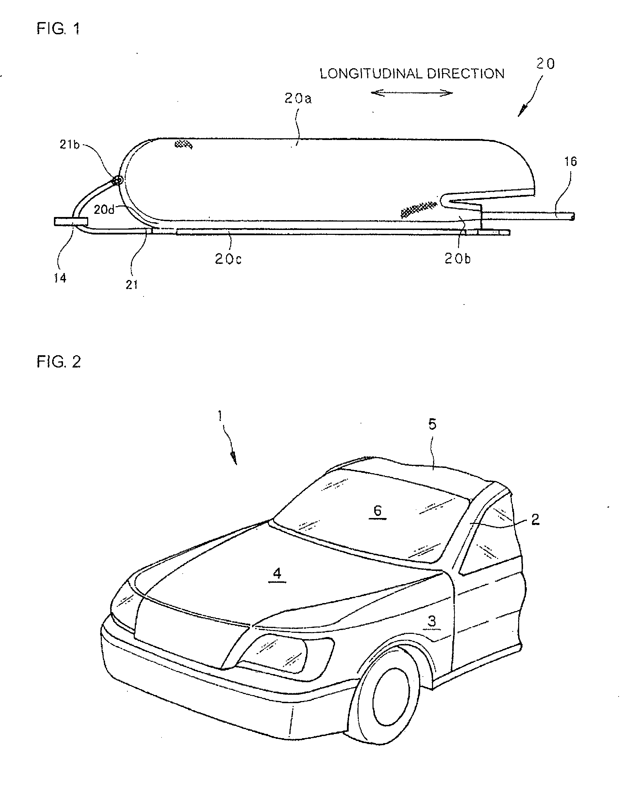

Fig. 1 illustrates an airbag 20 of the present embodiment. The airbag 20 of the present embodiment is formed by means of stitching an outer periphery of one sheet of a base cloth, and is composed of a main expanding portion 20a, a pipe-connecting portion 20b, and a tubular portion 20c serving as an example of an insertion portion. The main expanding portion 20a is formed to have an approximately elliptic shape, and serves as a portion for absorbing an impact of a collision between a vehicle 1 and an object of the collision such as a pedestrian or the like in an expansion of the main expanding portion 20a. The pipe-connecting portion 20b is a portion projected from the main expanding portion 20a, and a portion into which a pipe 16 is inserted and swaged. The tubular portion 20c is positioned on a side opposite to a surface of the airbag 20, which receives the impact, and the tubular portion 20c is a portion that is formed into a tubular shape so that a developing position limiting device 21, described later, can be inserted. Incidentally, when the tubular portion 20c is provided in at least a vehicle side 20d of the main expanding portion 20a and the pipe-connecting portion 20b, of the airbag 20, it is preferable because the position of the airbag 20 across an entire length thereof is limited.

Next, a state in which an airbag apparatus 10 including the airbag 20 is mounted on the vehicle 1 will be explained.

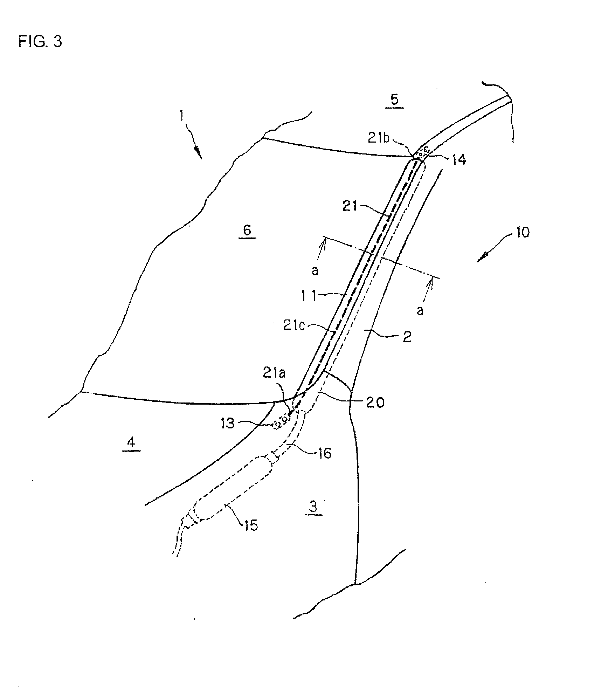

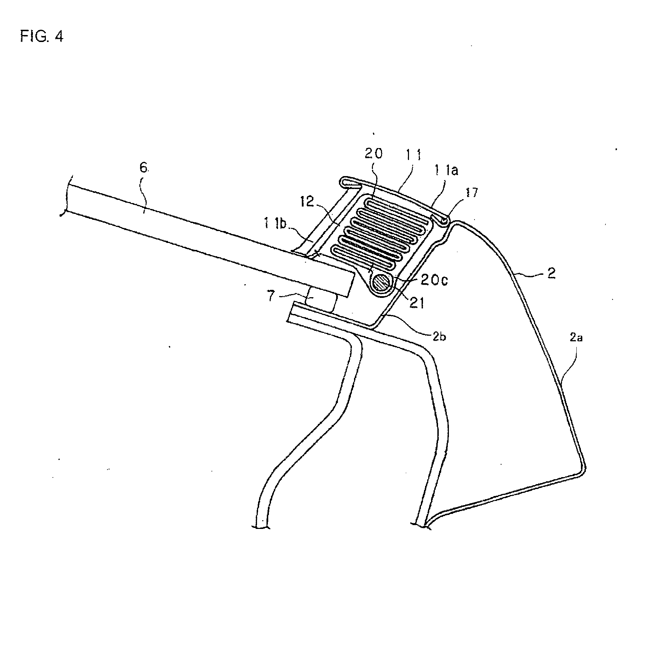

Fig. 2 is a perspective view illustrating the vehicle 1 in which the airbag apparatus 10 of the present embodiment is mounted, Fig. 3 is a perspective view illustrating the vicinity of a front pillar of the vehicle 1 of the present embodiment, and Fig. 4 is a cross-sectional view taken along a line a-a in Fig. 3.

In the drawings, a reference numeral 1 denotes a vehicle, a reference numeral 2 denotes a front pillar, a reference numeral 3 denotes a fender, a reference numeral 4 denotes a hood, a reference numeral 5 denotes a roof, a reference numeral 6 denotes a windshield, a reference numeral 7 denotes a seal, a reference numeral 10 denotes an airbag apparatus, a reference numeral 11 denotes a cover, a reference numeral 12 denotes a bag case, a reference numeral 13 denotes an anchor, a reference numeral 14 denotes a through anchor, a reference numeral 15 denotes a gas-generator, a reference numeral 16 denotes a pipe, a reference numeral 17 denotes a cover-splash prevention member, a reference numeral 20 denotes an airbag, and a reference numeral 21 denotes a developing position limiting device.

The vehicle 1 is provided with a front pillar 2 that couples a not-illustrated member or an engine room frame with the roof 5. Further, the vehicle 1 is provided with the windshield 6 that is surrounded by the hood 4, the roof 5 and front pillars 2, and is attached via the seal 7.

The airbag apparatus 10 is housed on a windshield 6 side of the front pillar 2 and the fender 3. The front pillar 2 is provided with a first surface 2a facing an outside of the vehicle 1 and a second surface 2b facing the windshield 6 side. On a second surface 2b side, the airbag 20 is housed in the cover 11 in a state of being housed in the bag case 12 together with the developing position limiting device 21 upon being folded back.

The cover 11 formed from a member having an approximately L-shape in cross section, which is provided with an upper cover 11a and a side cover 11b, and is disposed in such a way that the folded-back airbag 20 is hidden in a side of the second surface 2b of the front pillar 2. Incidentally, the folded-back airbag 20 may be directly housed in the cover 11 without being housed in the bag case 12.

In the cover 11, the cover-splash prevention member 17 such as a strap or the like is inserted into a folded-back portion 11c of the upper cover 11a. An end 17a of the cover-splash prevention member 17 is latched on a vehicle body side of a root portion of the front pillar 2 or the like by means of the anchor 13, and the other end 17b is latched on the through anchor 14. Incidentally, although not illustrated, the cover-splash prevention member 17 may be divided into a first cover-splash prevention member 17 that couples the anchor 13 with the cover 11, and a second cover-splash prevention member 17 that couples the through anchor 14 and the cover 11. Furthermore, the cover-splash prevention member 17 may be inserted into another folded-back portion of the upper cover 11a.

The developing position limiting device 21 is formed from a member having a strap shape or a belt shape, and one end 21a thereof is latched on the vehicle body side of the root portion of the front pillar 2 or the like by means of the anchor 13, and the other end 21b is latched on the airbag 20 through an insertion hole 14a of the through anchor 14 with a stitching work, a bonding work, or the like. For example, it is preferable to latch by means of providing a portion having an insertion hole or the like in the airbag 20. Moreover, an intermediate portion 21c is inserted into a tubular portion 20c that is formed in the airbag 20 by means of the stitching work or the like.

Incidentally, the one end 21a may be constructed to be latched on the gas-generator 15 or the airbag 20. Further, an anchor 13 and a through anchor 14 different from the anchor 13 and the through anchor 14 on which the cover-splash prevention member 17 is latched may be used. Furthermore, the through anchor 14 may have a smooth structure provided with a guide, a pulley, or the like in order for friction or the like not to have a large influence on the developing position limiting device 21. Moreover, in the present embodiment, although the tubular portion 20c is provided across an approximately entire length along the front pillar 2 of the airbag 20, for example, the tubular portion 20c may be provided in a plurality with intervals.

Below the fender 3 or the hood 4, the gas-generator 15 for generating a gas that expands the airbag 20, a pipe 16 for supplying the gas generated by the gas-generator 15 into the airbag 20, and so forth are housed.

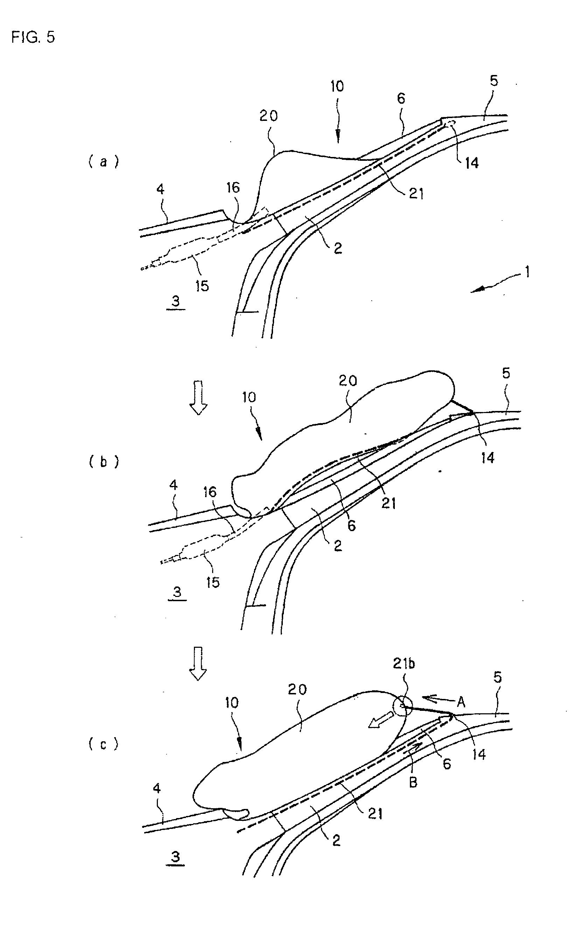

Next, an operation of the airbag apparatus 10 of the present embodiment will be explained. Fig. 5 is a view illustrating the operation of the airbag apparatus 10 of the present embodiment.

The airbag apparatus 10 as illustrated in Fig. 3 in a housed state is operated by means of a control device or the like on the basis of a detection signal, in a case that the vehicle 1 collides with a not-illustrated object of a collision, and an impactive force generated in the vehicle 1 is detected by means of a not-illustrated detecting device or the like.

Fig. 5 (a) illustrates an initial stage of an expanding operation, in which the airbag apparatus 10 starts to be operated, the gas flows into the airbag 20 through the pipe 16 from the gas-generator 15 that is housed in the fender 3, and the airbag 20 starts to be expanded. In the initial stage of the expanding operation, the airbag 20 starts to be expanded from a fender 3 side, and the cover 11 illustrated in Fig. 3 and Fig. 4 is developed by means of an expanding pressure.

Fig. 5(b) illustrates an intermediate stage of the expanding operation, in which the gas flows into the airbag 20 through the pipe 16 from the gas-generator 15, and the airbag 20 continues to be expanded. In the intermediate stage of the expanding operation, an entire airbag 20 is completely exposed outward from a folded-back state. Currently, a tension is not generated in the developing position limiting device 21, and the expanding operation of the airbag 20 continues.

Fig. 5(c) illustrates a completion stage of the expanding operation, in which the expanding operation of the airbag 20 is completed. In the completion stage of the expanding operation, the airbag 20 is completely expanded. A state of the airbag apparatus 10 in the completion stage of the expanding operation will be explained below.

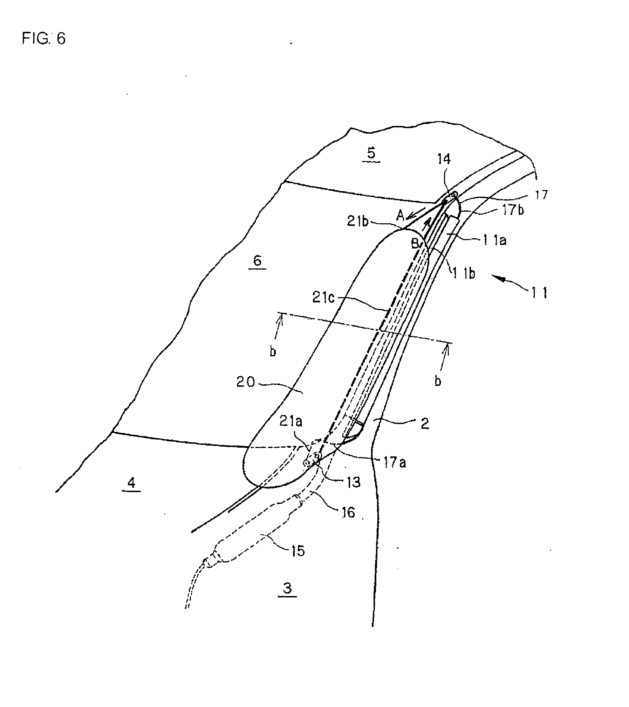

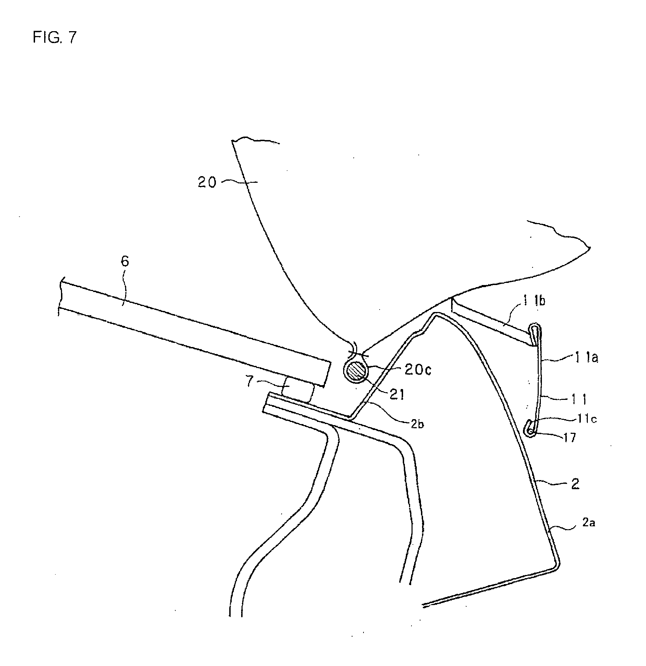

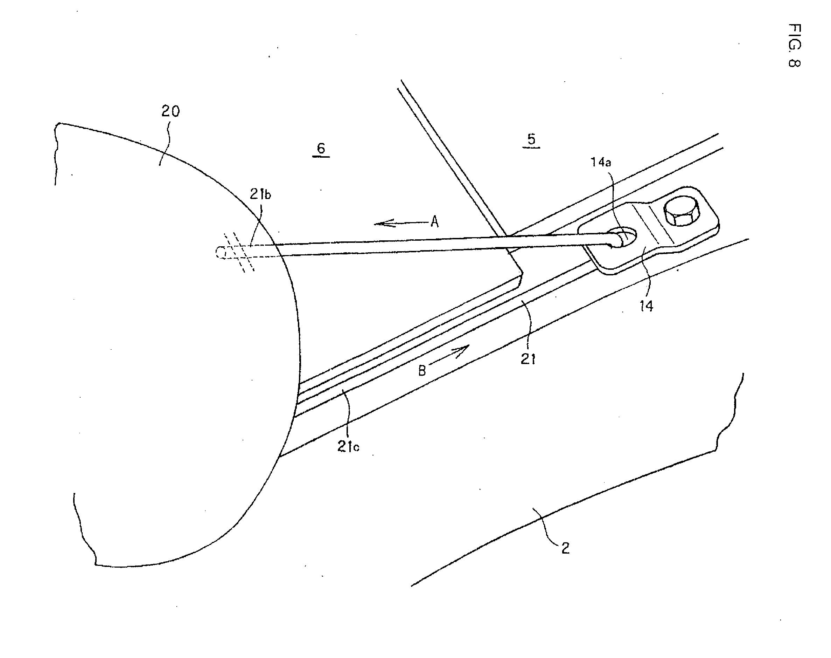

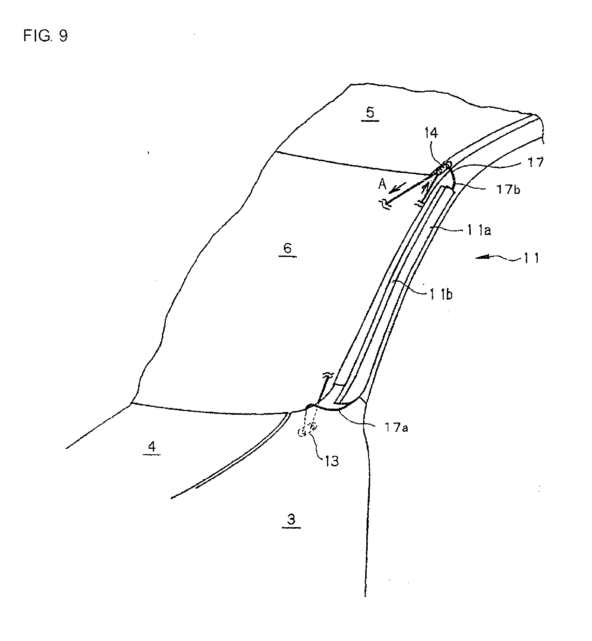

Fig. 6 is a perspective view illustrating the vicinity of the front pillar 2 in the completion stage of the expanding operation, Fig. 7 is a cross-sectional view taken along a line b-b in Fig. 6, Fig. 8 is an enlarged view illustrating the vicinity of the through anchor 14, and Fig. 9 is a view where the airbag 20 is omitted.

In the completion stage of the expanding operation, the airbag 20 is developed in a direction along the front pillar 2 above a part of the fender 3 and the hood 4, and in front of the front pillar 2.

Currently, the other end 21b of the developing position limiting device 21 that is latched on the airbag 20 is pulled in a direction opposite to the roof 5 as indicated by an arrow A in correspondence to the expanding operation of the airbag 20. Thereby, the intermediate portion 21c of the developing position limiting device 21 is pulled toward a side of the roof 5 relative to the through anchor 14 as indicated by an arrow B, and is brought to a state to be pressed to the windshield 6 side and the front pillar 2 side. Further, as illustrated in Fig. 6, the airbag 20 into which the developing position limiting device 21 is inserted is also brought to a state to be pressed to the windshield 6 side and the front pillar 2 side.

Incidentally, the developing position limiting device 21 may be provided in a plurality. Furthermore, the developing position limiting device 21 is not limited to the present embodiment, and as long as the construction, in which the airbag 20 is pressed to the windshield 6 side and the front pillar 2 side when the airbag is expanded, is employed, other embodiment may be applicable.

Currently, as illustrated in Fig. 9, since the cover 11 is latched on the vehicle body side via the anchor 13 and the through anchor 14 by means of the cover-splash prevention member 17, the cover 11 has no possibility to be splashed from the vehicle 1.

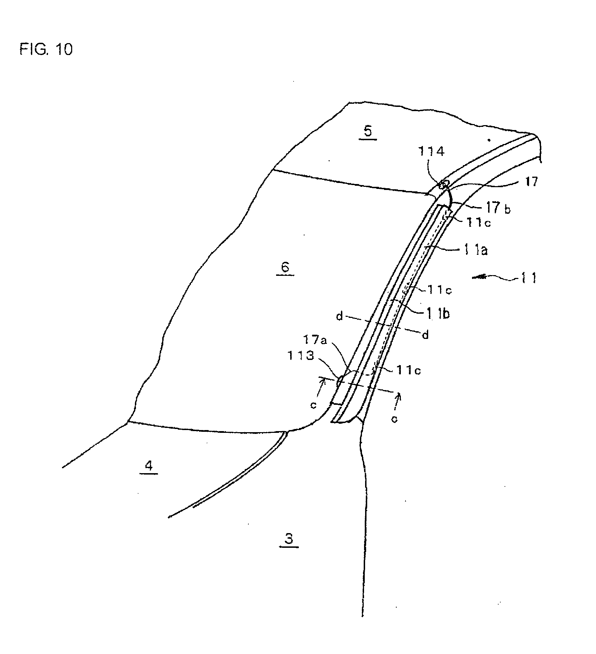

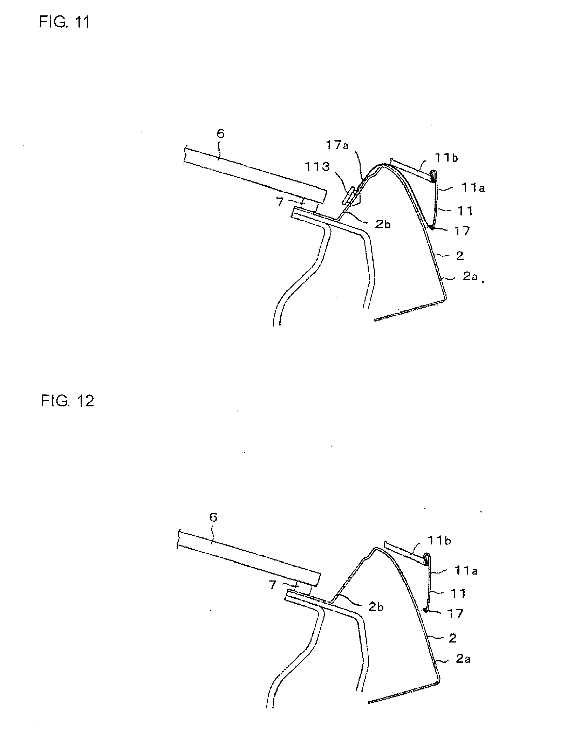

Next, another embodiment with respect to the cover-splash prevention member 17 will be explained. Fig. 10 through Fig. 12 are views illustrating another embodiment with respect to an attaching operation for the cover-splash prevention member 17 to the cover 11. Fig. 10 is a perspective view illustrating the vicinity of the front pillar in the completion stage of the expanding operation where the airbag is omitted, Fig. 11 is a view looking at a roof 5 side from a cross-section of a line c-c in Fig. 10, and Fig. 12 is a cross-sectional view taken along a line d-d in Fig. 10.

It is preferable that the cover-splash prevention member 17 is inserted into at least one place of the cover 11. Moreover, as illustrated in Fig. 10 and Fig. 11, it is further preferable that the cover-splash prevention member 17 inserted into three places of the cover 11.

In concrete terms, the folded-back portion 11c serving as a cover insertion portion of the upper cover 11a is provided in at least one place in the cover 11, and the cover-splash prevention member 17 is inserted into the folded-back portion 11c. One end 17a of the cover-splash prevention member 17 is latched on the vehicle body side such as a root portion of the front pillar 2 and so forth by means of a rivet 113, and the other end 17b is latched on an anchor 114.

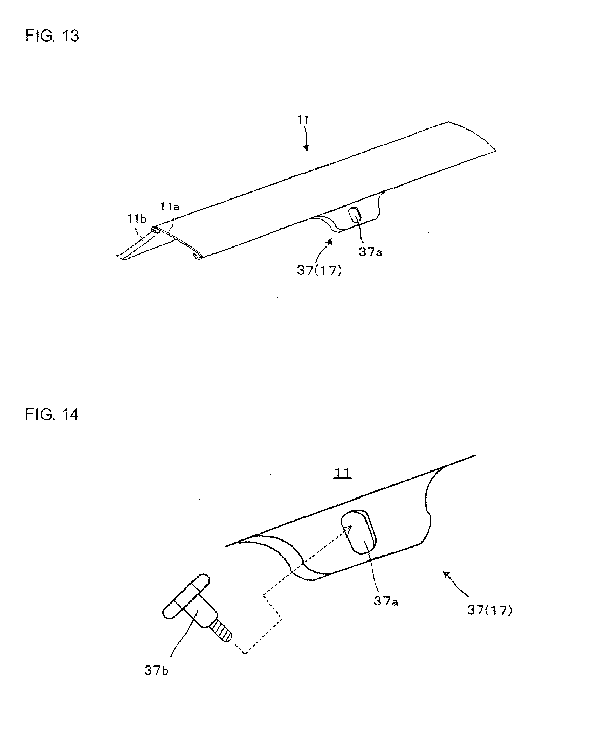

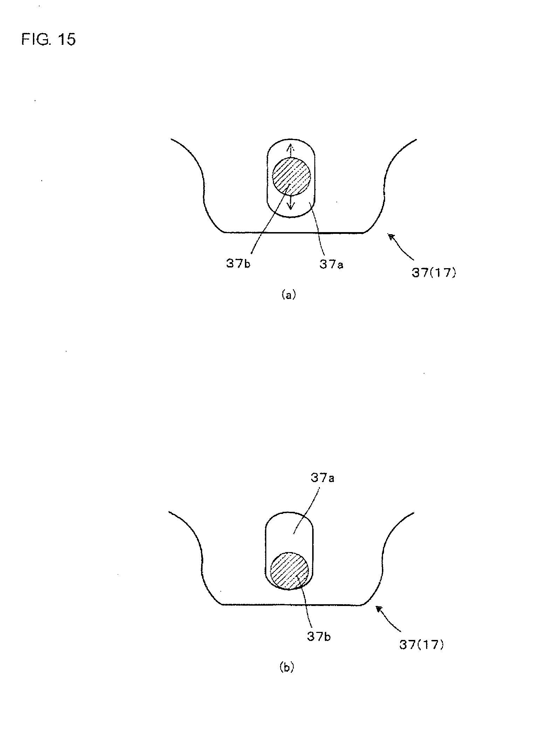

Fig. 13 through Fig. 15 are views illustrating another embodiment in which a hinge 37 serving as the cover-splash prevention member 17 is used. Fig. 13 is a perspective view illustrating the cover 11 using the hinge 37, Fig. 14 is an enlarged view illustrating a hinge 37 portion, and Fig. 15 is an enlarged view illustrating the hinge 37 portion in a usual time and an operating time thereof.

In this embodiment, the hinge 37 is provided to serve as the cover-splash prevention member 17. The hinge 37 may be provided in the cover 11 at least one in number. In this embodiment, the hinge 37 is provided one in number at an approximately center portion of the cover 11.

The hinge 37 is provided with a hole 37a. As illustrated in Fig. 14, the hole 37a is formed to have a long hole shape, and a shoulder bolt 37b serving as an engaging member that is engaged with the pillar 2 is inserted into the hole 37a. Incidentally, the hole 37a is not always necessary to have the long hole shape, and a round shape may also be applicable.

As illustrated in Fig. 15(a), in a usual time before the airbag is expanded, it is preferable that the shoulder bolt 37b is screwed upon adjusting a height of the cover 11 relative to the pillar 2 by means of the long hole-shaped hole 37a.

In the operating time after the airbag is expanded, the cover 11 is opened by means of the expanding operation of the airbag 20. Then, as illustrated in Fig. 15(b) the cover 11 is moved relative to the shoulder bolt 37b by means of the long hole-shaped hole 37a. The airbag 20 can be smoothly expanded by this movement.

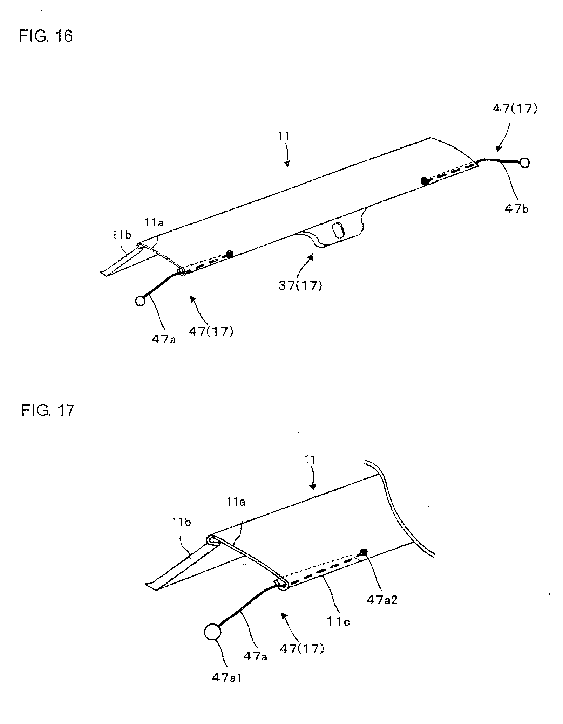

Fig. 16 is a view illustrating another embodiment where the hinge 37 and a wire 47 are used to serve as the cover-splash prevention member 17.

In this embodiment, the hinge 37 illustrated in Fig. 13 through Fig. 15 is provided at the approximately center portion of the cover 11, and a first wire 47a and a second wire 47b for coupling the vehicle body side such as the anchor, the rivet, or the like with the cover 11 are provided at both ends of the cover 11.

Fig. 17 is an enlarged view illustrating a first wire 47a portion. The first wire 47a is inserted into the folded-back portion 11c of the upper cover 11a of the cover 11, and one end thereof forms a fixing portion 47a1 to be fixed to the vehicle body side such as the anchor, the rivet, or the like, and the other end thereof forms a retaining portion 47a2 that is formed so as not to be pulled out from the folded-back portion 11c.

In the first wire 47a of this embodiment, a circular portion into which the rivet or the like can be inserted is formed to serve as the fixing portion 47a1, and a portion having a large diameter by which the first wire 47a is not pulled out from the folded-back portion 11c is formed to serve as the retaining portion 47a2. The second wire 47b is also formed in the same manner.

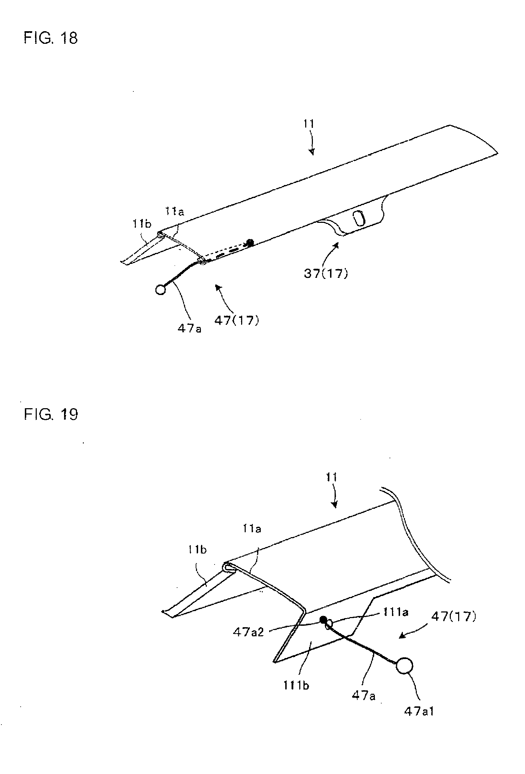

Incidentally, the wire 47 is not always necessary to be provided at both ends of the cover 11, and as illustrated in Fig. 18, a structure where the wire 47 is provided only at one end of the cover 11 is also applicable.

Further, there is also no need to provide the folded-back portion 11c in the cover 11, and as illustrated in Fig. 19, it is also applicable that a flange 111a and a hole 111b are provided, and a wire 47a is inserted into the hole 111b. Currently, a circular portion is formed to serve as the fixing portion 47a1 so that the rivet or the like can be inserted, and a portion having a larger diameter than that of the hole 111b is formed to serve as the retaining portion 47a2 so that the wire 47 is not pulled out from the hole 111b.

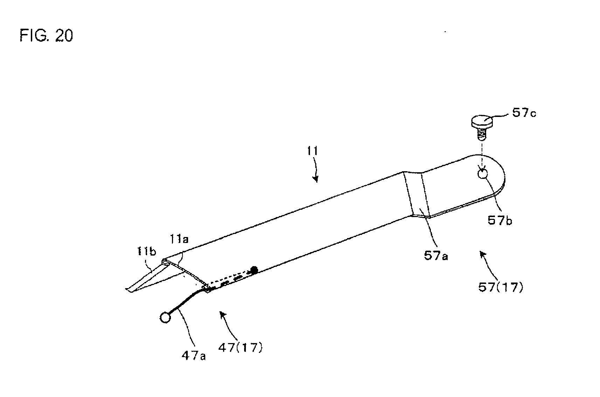

Fig. 20 is a view illustrating another embodiment of the cover-splash prevention member 17. In this embodiment, the wire 47 illustrated in Fig. 17 is provided at one end of the cover 11, and a folding portion 57 is provided at the other end of the cover 11 to serve as the cover-splash prevention member 17. Incidentally, the wire 47 at one end of the cover 11 may have the same construction as that illustrated in Fig. 19.

The folding portion 57 is formed in the vicinity of an end portion of the cover 11 and is provided with a fold line 57a and a hole 57b. The fold line 57a is formed to be bent easier than other portion. The hole 57b is a hole where a bolt 57c, the rivet, or the like for fixing the cover 11 to the vehicle body side is inserted.

A structure is formed in such a way that when the airbag 20 is operated, the folding portion 57 is folded at the fold line 57a and the cover 11 is opened.

Incidentally, in the present embodiment, although a structure where the gas-generator 15 is housed in the fender 3 is employed, a structure where the gas-generator 15 is housed in the roof 5 side may be applicable. Currently, it is preferable that the anchor 13 and the through anchor 14 are also disposed on reversed sides, respectively, i.e., the anchor 13 is disposed on the roof 5 side, and the through anchor 14 is disposed on the fender 3 side.

As described above, since the cover-splash prevention member 17 that separates the cover 11 from the vehicle 1 in a state where the cover 11 is coupled with the vehicle 1 at a time when the airbag 20 is expanded is provided, a load is hard to be applied to the cover 11, and a breakage and a splash of the cover 11 can be prevented.

Furthermore, since the cover 11 is provided with at least one folded-back portion 11c serving as the cover insertion portion, into which the cover-splash prevention member 17 is inserted, an attaching work therefor can be performed with ease.

Moreover, since the developing position limiting device 21 inserted into the tubular portion 20c provided in the airbag 20, in which one end 21a thereof is latched on the vehicle 1 or the airbag 20, and inserted into the through anchor 14 fixed to the vehicle 1 on the other end side and folded back, and in which the other end 21b thereof is latched on the airbag 20, is provided, when the other end 21b of the developing position limiting device 21 that is latched on the airbag 20 is pulled by the expanded airbag 20 at the time when the airbag 20 is expanded, the developing position limiting device 21 is strained and the tubular portion 20c of the airbag 20 is pulled to the vehicle 1 side, and the airbag 20 itself is also pulled to the vehicle body 1 side, the airbag 20 can be stably and rapidly expanded without a rebound in an upper and lower direction and a lateral wobbling in a width direction of the vehicle 1.

Further, since the cover-splash prevention member 17 is latched on the through anchor 14, common members can be used, the number of the parts can be reduced, and the cost can be suppressed to be low.

Furthermore, since the anchor 13 for latching the one end 21a of the developing position limiting device 21 on the vehicle is provided, and the cover-splash prevention member 17 is latched on the anchor 13, the common members can be used, the number of the parts can be reduced, and the cost can be suppressed to be low.

### [Industrial Applicability]

In accordance with the airbag apparatus according to the present invention, since a cover-splash prevention member that separates a cover from a vehicle in a state where the cover is coupled with the vehicle at a time when the airbag is expanded is provided, a load is hard to be applied to the cover, and a breakage and a splash of the cover can be prevented.

Moreover, since the cover is provided with at least one cover insertion portion, into which the cover-splash prevention member is inserted, an attaching work can be performed with ease.

Further, since the developing position limiting device inserted into the insertion portion provided in the airbag, in which one end thereof is latched on the vehicle or the airbag, and inserted into an insertion member fixed to the vehicle on the other end side and folded back, and in which the other end thereof is latched on the airbag, is provided, when the other end of the developing position limiting device that is latched on the airbag is pulled by the expanded airbag at the time when the airbag is expanded, the developing position limiting device is strained and the insertion portion of the airbag is pulled to the vehicle side, and the airbag itself is also pulled to the vehicle side, thereby the airbag can be stably and rapidly expanded without a rebound in an upper and lower direction and a lateral wobbling in a width direction of the vehicle.

Furthermore, since the cover-splash prevention member is latched on the insertion member, the common members can be used, the number of the parts can be reduced, and the cost can be suppressed to be low.

Moreover, since a latching device for latching the one end of the developing position limiting device on the vehicle is provided, and the cover-splash prevention member is latched on the latching device, the common members can be used, the number of the parts can be reduced, and the cost can be suppressed to be low.

## Claims

1. A vehicle comprising an airbag apparatus,
said airbag apparatus comprising:
an airbag (20) that is disposed along a front pillar (2) of the vehicle and adapted to be expanded outside of a vehicle (1);
an inflator (15) for blowing out a gas into the airbag (20);
a detecting device for detecting a collision;
a control device for activating the inflator (15) by means of a signal from the detecting device; and
a cover (11) for housing the airbag (20),
**characterized in that**
the front pillar (2) comprises a first surface (2a) facing an outside of a vehicle (1) and a second surface (2b) facing a windshield (6) side, wherein the airbag (20) is housed in the cover (11) on the second surface (2b) side of the front pillar (2), and
that a cover-splash prevention member (17; 37,47; 47,57) is connected to the cover (11), and is configured to allow separation of the cover (11) from the vehicle at the second surface (2b) side of the front pillar (2) and to prevent breakage and splash of the cover (11) while maintaining a state in which the cover (11) is coupled with the vehicle (1) at the first surface (2a) side of the front pillar (2) at a time when the airbag (20) is expanded.

2. The airbag apparatus according to Claim 1, wherein the cover (11) is provided with at least one cover insertion portion (11c; 111a, 111b), into which the cover-splash prevention member (17) is inserted.

3. The airbag apparatus according to either one of Claims 1 and 2, wherein a developing position limiting device (21) inserted into an insertion portion (20c) provided in the airbag (20), in which one end (21a) thereof is latched on the vehicle (1) or the airbag (20), and inserted into an insertion member (14) fixed to the vehicle (1) on the other end side and folded back, and in which the other end (21b) thereof is latched on the airbag (20), is provided.

4. The airbag apparatus according to Claim 3, wherein the cover-splash prevention member (17) is latched on the insertion member (14).

5. The airbag apparatus according to either one of Claims 3 and 4, wherein a latching device (13) for latching the one end (21a) of the developing position limiting device (21) on the vehicle (1) is provided, and wherein the cover-splash prevention member (17) is latched on the latching device (13).

## Patentansprüche

1. Fahrzeug mit einer Airbag-Vorrichtung,
wobei die Airbag-Vorrichtung aufweist:
einen Airbag (20), der entlang einer A-Säule (2) des Fahrzeugs angeordnet ist und angepasst ist, um außerhalb eines Fahrzeugs (1) zu expandieren,
einen Gasgenerator (15) zum Ausblasen von Gas in den Airbag (20),
eine Erfassungseinrichtung zum Erfassen einer Kollision,
eine Steuereinrichtung zum Aktivieren des Gasgenerators (15) durch ein Signal von der Erfassungsvorrichtung, und
eine Abdeckung (11) zum Unterbringen des Airbags (20), **dadurch gekennzeichnet, dass**
die A-Säule (2) eine erste Oberfläche (2a), die einer Außenseite eines Fahrzeugs (1) zugewandt ist, und eine zweite Oberfläche (2b), die der Seite einer Windschutzscheibe (6) zugewandt ist, aufweist, wobei der Airbag (20) in der Abdeckung (11) auf der Seite der zweiten Oberfläche (2b) der A-Säule (2) untergebracht ist, und
dass ein Abdeckungsabspring-Schutzelement (17; 37, 47; 47, 57) mit der Abdeckung (11) verbunden und ausgebildet ist, um das Trennen der Abdeckung (11) von dem Fahrzeug auf der Seite der zweiten Oberfläche (2b) der A-Säule (2) zu erlauben und Bruch und Abspringen der Abdeckung (11) zu verhindern, wobei bei expandiertem Airbag (20) ein Zustand beibehalten wird, in dem die Abdeckung (11) mit dem Fahrzeug (1) auf der Seite der ersten Oberfläche (2a) der A-Säule (2) verbunden ist.

2. Airbag-Vorrichtung nach Anspruch 1, wobei die Abdeckung (11) wenigstens einen Abdeckungs-Einsetzabschnitt (11c; 111a, 111b) aufweist, in den das Abdeckungsabspring-Schutzelement (17) eingesetzt ist.

3. Airbag-Vorrichtung nach Anspruch 1 oder 2 mit einer Entfaltungspositions-Begrenzungsvorrichtung (21), die in einem im Airbag (20) vorgesehenen Aufnahmeabschnitt (20c) eingesetzt ist, wobei deren eines Ende (21a) an dem Fahrzeug (1) oder dem Airbag (20) befestigt ist und in ein am Fahrzeug (1) auf der anderen Endseite befestigten Einführelement (14) eingesetzt und zurückgefaltet ist, und wobei deren anderes Ende (21b) am Airbag (20) befestigt ist.

4. Airbag-Vorrichtung nach Anspruch 3, wobei das Abdeckungsabspring-Schutzelement (17) am Einführelement (14) befestigt ist.

5. Airbag-Vorrichtung nach Anspruch 3 oder 4, wobei eine Befestigungsvorrichtung (13) zum Befestigen des einen Endes (21a) der Entfaltungspositions-Begrenzungsvorrichtung (21) am Fahrzeug (1) vorgesehen ist und das Abdeckungsabspring-Schutzelement (17) an der Befestigungsvorrichtung (13) befestigt ist.

## Revendications

1. Véhicule comprenant un dispositif de coussin gonflable,
ledit dispositif de coussin gonflable comprenant :
un coussin gonflable (20) disposé le long d'un montant avant (2) du véhicule et prévu pour être gonflé à l'extérieur d'un véhicule (1) ;
un générateur de gaz (15) pour refouler un gaz à l'intérieur du coussin gonflable (20) ;
un dispositif de détection permettant de détecter une collision ;
un dispositif de commande permettant d'activer le générateur de gaz (15) au moyen d'un signal dudit dispositif de détection ; et
un couvercle (11) pour le maintien du coussin gonflable (20),
**caractérisé**
**en ce que** le montant avant (2) comporte une première surface (2a) opposée à l'extérieur du véhicule (1) et une deuxième surface (2b) opposée à un côté du pare-brise (6), le coussin gonflable (20) étant maintenu dans le couvercle (11) sur le côté de la deuxième surface (2b) du montant avant (2), et
**en ce qu'**un élément de protection (17 ; 37, 47 ; 47; 57) du couvercle contre les éclats est raccordé au couvercle (11), et est prévu pour permettre la séparation du couvercle (11) d'avec le véhicule sur le côté de deuxième surface (2b) du montant avant (2), et pour protéger le couvercle (11) contre la casse et les éclats en maintenant un état où le couvercle (11) est raccordé au véhicule (1) sur le côté de première surface (2a) du montant avant (2) quand le coussin gonflable (20) est gonflé.

2. Dispositif de coussin gonflable selon la revendication 1, où le couvercle (11) est pourvu d'au moins une partie (11c ; 111a, 111b) de logement de couvercle, où l'élément de protection (17) du couvercle contre les éclats est mis en place.

3. Dispositif de coussin gonflable selon la revendication 1 ou la revendication 2, où est prévu un dispositif de limitation (21) de position d'expansion mis en place dans une partie de logement (20c) prévue dans le coussin gonflable (20), dont une extrémité (21a) est enclenchée sur le véhicule (1) ou le coussin gonflable (20), et qui est inséré dans un élément de logement (14) fixé sur le véhicule (1) sur l'autre côté d'extrémité et replié, et dont l'autre extrémité (21b) est enclenchée sur le coussin gonflable (20).

4. Dispositif de coussin gonflable selon la revendication 3, où l'élément de protection (17) du couvercle contre les éclats est enclenché sur l'élément de logement (14).

5. Dispositif de coussin gonflable selon la revendication 3 ou la revendication 4, où est prévu un dispositif d'enclenchement (13) pour l'enclenchement sur le véhicule (1) de la première extrémité (21a) du dispositif de limitation (21) de position d'expansion, et où l'élément de protection (17) du couvercle contre les éclats est enclenché sur le dispositif d'enclenchement (13).
